# EUROPEAN PATENT APPLICATION

(11) **EP 2 278 542 A1**
(43) Date of publication of application: **26.01.2011**
(21) Application number: 09305652.1
(22) Date of filing: 07.07.2009
(51) Int. Cl.: G06Q 30/00, G06F 17/30

(54) **Method for presenting a content**

(71) Applicant: Thomson Licensing, 92130 Issy-les-Moulineaux (FR)
(72) Inventor: Li, Jun, 92648, BOULOGNE cedex (FR); Chen, Ren Lei, 92648, BOULOGNE cedex (FR); Ma, Xiao Jun, 92648, BOULOGNE cedex (FR)
(74) Representative: Berthier, Karine

(57) **Abstract**

A method for presenting a selected content on a first device is provided. The first device obtains the selected content, wherein the selected content is determined based on a first content presented on a second device; and it presents the selected content. So it establishes a connection between content presentations of the first device and the second device.

## Description

### TECHNICAL FIELD

The present invention relates to data processing, and more particularly, relates to a method for presenting a content.

### BACKGROUND

Advertising is a form of communication that typically attempts to persuade potential customers to purchase or to consume more of a particular brand of product or service. Hence, many advertisements are designed to assist to generate increased consumption of those products and services through the creation and reinvention of the "brand image". For these purposes, advertisements sometimes embed their persuasive message with factual information. Various media are used to deliver these messages, including television, radio, cinema, magazines, newspapers, video games, the Internet, carrier bags and billboards. The advertising information that is intended to convey to potential customers can be in either a single one or a combination of two or more of following types, including text, audio, video, flash file, image, animation etc.

Currently, two of major advertising media are TV and the Internet.

The TV is generally considered the most effective mass-market advertising medium, as is reflected by the high prices TV networks charge for commercial airtime during popular TV events or in the prime time. The TV event may be a NBA match, a cartoon, a TV series etc. In addition, virtual advertisements may be inserted into regular television programs through computer graphics. They are typically inserted into blank backdrops or used to replace local billboards that are not relevant to audience. In addition, the computer graphics can be used to insert one or more new virtual billboards into the background where none exists in real life. Furthermore, the virtual product placement is also possible, where software tools are used to allow products to be inserted, deleted and substituted in a context usually devoid of advertisements, such as movies, television shows, news programs etc. Normally, the computer graphics and digital editing are used to put products like umbrellas or cups into television programs after the shows are filmed or taped. As of 2007, a new trend debuted in product placement, i.e. the development of capabilities that permits dynamic or switchable product placement. Previously post production tools have permitted one time insertion of new product placement of images and billboard advertising, notable in televised at baseball and football games. As of 2007, startups are offering or developing the ability to switch product placement. First generation of virtual product placement has tended to be used in sports arenas where the geometrical relationships of camera and the surface of the flat area onto which the billboard is projected, can be easily calculated. Second generation product placement or dynamic product placement is more focused upon commercial products. Third generation virtual or dynamic product placement allows targeting of customers with different products that can be dynamically switched based upon such factors as demographics, psychographics or behavioral information about the consumer. When game software has access to a user's Internet connection, marketers gain the ability to change displayed in-game advertisements. In addition, in-game advertising vendors may use software to transmit user information to their servers, such as individual player ID and data about what was on the user's screen and how long was it displayed.

On the Internet, advertising information is generally in the forms of web banner, pop-up etc. A web banner or banner advertisement is a form of advertising on the World Wide Web. This form of online advertisement embeds an advertisement into a web page. It is intended to attract traffic to a website by linking to the website of the advertiser. The advertisement is constructed from an image (GIF, JPEG, PNG), JavaScript program or multimedia object employing technologies such as Silverlight, Java, Shockwave or Flash. The images (i.e. either wide and short, or tall and narrow in shape) are usually placed on web pages that have interesting contents, such as a newspaper article. The web banner is displayed when a web page that has the banner is loaded into a web browser. When the viewer clicks on the banner, the viewer is directed to the website advertised in the banner. In some cases, banners are delivered by a central advertisement server. It works when certain web sites open a new web browser window to display advertisements. The pop-up window containing an advertisement is usually generated by JavaScript, but can be generated by other techniques as well. A variation on the pop-up window is the pop-under advertisement, which opens a new browser window hidden under the active window. Pop-unders do not interrupt the user immediately and are not seen until the covering window is closed.

Currently, it is desired of a solution to combine the TV advertisement and the Internet advertisement together.

### SUMMARY

According to an aspect of the present invention, a method for presenting a selected content on a first device is provided. The first device obtains the selected content, wherein the selected content is determined based on a first content presented on a second device; and it presents the selected content.

According to the aspect of the present invention, it establishes a connection between content presentations of the first device and the second device.

It is to be understood that more aspects and advantages of the invention will be found in the following detailed description of the present invention.

### BRIEF DESCRIPTION OF THE DRAWINGS

The accompanying drawings illustrate embodiment of the invention together with the description which serves to explain the principle of the invention. Therefore, the invention is not limited to the embodiment. In the drawings:
Fig. 1 is a diagram illustrating a network structure for presenting an advertisement content according to an embodiment of the present invention;
Fig. 2 is a flow chart illustrating an example of method for presenting an advertisement content according to the present embodiment;
Fig. 3 is diagram illustrating another network structure for presenting an advertisement content according to the present embodiment.

### DETAILED DESCRIPTION

The embodiment of the present invention will now be described in detail in conjunction with the drawings. In the following description, some detailed descriptions of known functions and configurations may be omitted for clarity and conciseness.

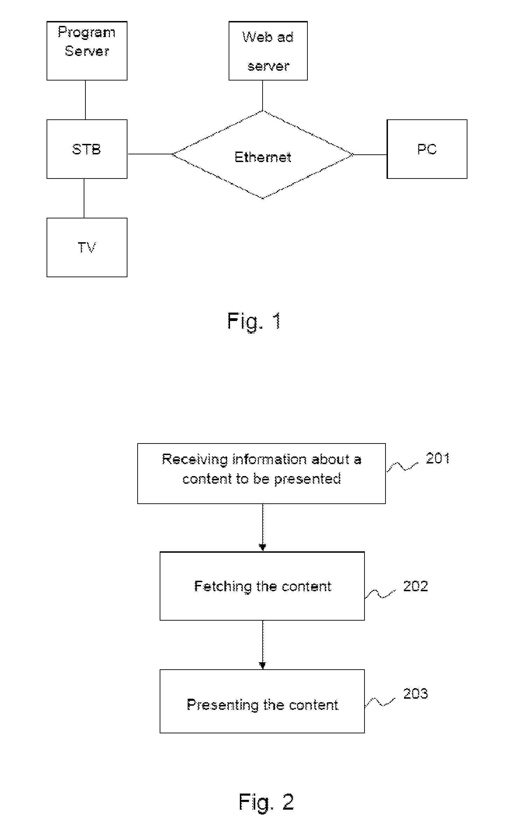

Fig. 1 is a diagram illustrating an example of a network for presenting an advertisement content according to an embodiment of the present invention. The content may be in a single one or a combination of two or more content types comprising text, image, audio, video, animation, flash file etc. As shown in the Fig. 1, the network comprises a program server, a STB (set top box), a TV, a PC and a web ad server, functions of which are elaborated as follows:
-- the program server is used for providing digital TV programs. In this example, the programs are provided within signals through coaxial cables. For example, in an IP-based network, the programs will be modulated into IP packets.
-- the web ad server is configured to provide advertisement contents. The advertisement contents may use one or more the above mentioned content types.
-- the STB is connected to the program server through a cable network in this example. It's known to a person skilled in the art that other types of networks can also be used, such as a wireless network. The STB is also connected to a TV so that it extracts a content of a particular content type from signals received from the program server, and then displays the content on the TV. In addition, an ad agent is added into the STB. The ad agent is mainly in charge of handling advertisement content presentation, which will later be described in detail below.
-- the PC is connected to the STB through, for example, an Ethernet. The Ethernet is also connected to a network where the web ad server is located, such as the Internet. In addition, a plug-in computer program (also named add-in, add-on and snap-in) is implemented for a web browser in the PC. The plug-in computer program consists of computer instructions that interact with the ad agent. Detailed description of functions for the plug-in can be found in below description.

Fig. 2 is a flow chart illustrating an example of presenting an advertisement content according to the present embodiment.
--- In the step 201, the STB receives information about an advertisement content to be presented. In this example, the information about the advertisement content is used to indicate the location of the advertisement content, e.g. the URL of the advertisement content, and the information about the advertisement is received from the PC. Specifically, this information is received by the ad agent (not shown in the figure) of the STB from the plug-in of the PC. It should be noted the information about the advertisement content can be received from devices other than the PC, e.g. an advertisement management device (not shown) that is used to manage the advertisement content to be presented on the STB based on the advertisement content determined by the PC. The advertisement content is determined by the plug-in of the PC based on the content presented on the PC through following ways: (1) when a user browses a web page, the plug-in determines an advertisement content associated with this web page. It may be determined by plug-in's analyzing the source code of the web page; (2) the plug-in determines an advertisement content based on user's browsing activity during a predetermined period of time, e.g. the plug-in collects the information about web pages browsed during 1 hour, and then uses the collected information to determine an advertisement content. To be more specifically, the information about the web pages are keywords determined from the web pages; (3) the plug-in determines an advertisement content based on user's input of keywords in a search engine; (4) the plug-in determines an advertisement content upon user's clicking on a link or button, which relates to the advertisement content, in a web page. After the determination of the advertisement content, the plug-in determines the URL of the advertisement content through following ways: (1) the URL exists within the web page, and the plug-in determines it by analyzing the source code of the web page; (2) the plug-in maintains a table indicating the corresponding relationship between advertisement contents and URLs. By querying the table, the plug-in determines the URL.
--- In the step 202, the STB fetches the advertisement content based on the received information about the advertisement content. To be specific, after the ad agent of the STB receives the information about the advertisement content, it establishes a communication with the web ad server to fetch the advertisement content by using the information about the advertisement content, i.e. the URL in this example. The fetched advertisement content is then stored in the STB.
--- In the step 203, the STB presents the advertisement content, in this example, on TV connected thereto according to the content type of the advertisement content, which includes text, audio, video, image, animation, flash file etc. The type of advertisement content can be determined by several means: (1) the information about the advertisement content contains information indicating the type of the advertisement content; (2) the type of the advertisement content can be detected by analyzing the advertisement content; (3) several attributes associated with the advertisement content, including the content type, presenting time, priority etc. are fetched together with the advertisement content by the ad agent of the STB. In this example, 3 parameters for presentation associated with the advertisement content are determined by the STB, i.e. a time parameter for indicating when to present, a position parameter for indicating where (i.e. the left and top parameters on TV screen) to present and a size parameter for indicating the window size (i.e. length and width parameters) of presentation. It should be noted that other parameters can also be added, such as the length parameter indicating the length of the presentation, based on practical needs. Moreover, it should also be noted that some parameters may be meaningless for some type of advertisement content, and then can be removed. For example, the advertisement content in the type of audio does not need the position parameter and the size parameter. Generally, the text advertisement content is presented as soon as it is received. The time parameter of the audio or video advertisement content can also be the time when it is received. Furthermore, the advertisement content is presented according to the presentation of the TV programs on TV, which is designed to cause impact on the presentation of the TV programs as little as possible. Assuming the ad agent is aware of the time schedule of the TV programs, it may determines an appropriate time for presenting the audio or video advertisement content based on the time schedule, e.g. the advertisement time period between TV programs. In addition, the size parameter of the video or image advertisement content could be a full screen or a picture-in-picture based on user's need. As to the image or text, it may be presented in a margin area of the TV screen with a horizontal rectangle shape or vertical rectangle shape, which consequently causes little impact on the presentation of TV programs.

According to a variant of the present embodiment, the information about an advertisement content received in the step 201 is an advertisement identifier used to uniquely indicates the advertisement content, and the STB or other device, such as the web ad server maintains a table indicating the corresponding relationship between advertisement identifiers and locations where to retrieve the advertisements. The location here may be the URL.

According to a variant of the present embodiment, the advertisement content may be stored in the PC other than the web ad server.

According to a variant of the present embodiment, the presentation parameters associated with the advertisement contents are determined by the PC or the web ad server, or preconfigured in the PC or the web ad server. After an advertisement content is determined in the step 201, the corresponding presentation parameters are transmitted to the ad agent of the STB.

According to a variant of the present embodiment, the ad agent of the STB does not store the advertisement content. It just establishes a communication with the web ad server to receive streamed advertisement content when it begins to present the advertisement content.

According to a variant of the present embodiment, the steps of 201 and 202 can be substituted with a step that the PC itself fetches the determined advertisement content and transmits it to the STB.

According to a variant of the present embodiment, two or more advertisement contents associated with a web page currently browsing may be determined.

According to a variant of the present embodiment, the STB keeps receiving a plurality of information about advertisement contents and maintains a list of advertisement content. Once a new advertisement content is determined in the step 201, it will be added to the list. The list may be in the form of a table. In addition, each advertisement content corresponds to a priority. The priority information may be used to determine the presentation order of all advertisement contents.

According to a variant of the present embodiment, the plug-in of the PC stores the information of the advertisement content for the STB when the STB can not be reached, e.g. power off. And once the STB becomes available, the plug-in of the PC then transmits the stored information to the ad agent of the STB.

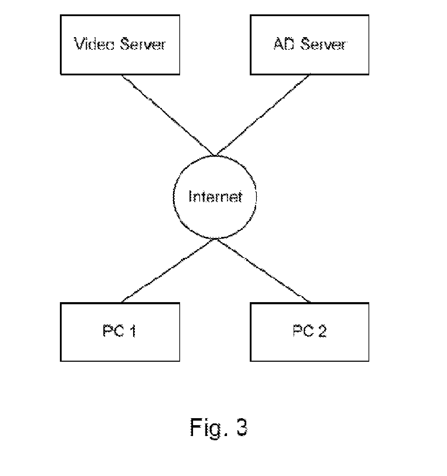

According to a variant of the present embodiment, it is not limited to the network as shown in the Fig. 1, i.e. the method can be applied to other types of network. Fig. 3 is a diagram illustrating another network structure for presenting an advertisement content according to an embodiment of the present invention. The network comprises a video server for providing video programs, an ad server for providing advertisement contents, a PC1 and a PC2. They are all connected to the Internet. The PC1 is receiving a video program from the video server, and the PC2 is browsing web pages. Then an advertisement content is determined by the PC2 and informed to the PC1. The PC1 then presents the determined the advertisement content.

According the present embodiment, the advertisement content is first determined by the PC and then presented on the TV. But a variant of the present embodiment provides a method where the advertisement content is determined by the STB based on the content presented on the STB and then presented on the PC. It can almost be implemented by interchanging the functions of plug-in and ad agent except the STB's determination of advertisement content and presentation style of advertisement content in PC. With regard to the determination of advertisement content based on the content presented on the STB, the STB can detect a parameter unique indentifying the current program, e.g. frequency range of the current program in coaxial cable, and then uses the parameter to determine the advertisement content associated with the program. It should be noted other determination means are also possible, e.g. the STB maintains an identifier uniquely indentifying the channel of the current program, and the identifier changes as the channel changes; the STB can determine an advertisement content by querying a server maintaining a relationship between identifiers and advertisement contents. With regard to the presentation style of the advertisement content, the PC presents the advertisement content according to current presentation, e.g. presentation of a web page. For example, it can use pop-up windows for presenting the advertisement content of text type. It should be noted other presentation means are also possible and varies dependent on the type of the advertisement content, e.g. when the advertisement content is an audio file, it may playback it in a background program without a visual presentation.

According to a variant of the present embodiment, the PC or the STB could be other type of digital devices, such as a digital TV with functions of STB inside, a portable handheld device.

According to a variant of the present embodiment, the program server and the web ad server are integrated into a single device.

Because the advertisement content is determined based on user's activity or interests, it is more likely to target the advertisement contents to the potential consumers or buyers. In addition, it establishes a connection between content presentations of the STB and PC.

According to a variant of the present embodiment, it's not limited to advertisement contents that are used for the purpose of advertizing; other purposes of contents are also applicable, e.g. tipping information, a clip of video, a brief introduction using text and audio etc.

In a nutshell, the present embodiment provides a method where a first device is presenting a first content while a second device is presenting a second content; based on the content presented on the second device, a selected content is determined, e.g. by the second device or by a device connected to the second device (e.g. a server or a central control device, and even the first device is possible); and then the selected content is presented on the first device, the presentation can be playbacking audios or videos, displaying texts, images etc besides some presentation means mentioned above. In addition, the content can be presented by using techniques of computer graphics or virtual product placement. The first content, the second content and the selected content can be in a single or a combination of following types: audio, video, text, image, animation, flash file and other types known to a person skilled in the art. In addition, it should be noted that the method can be applicable to a scenario where the first and second devices are both PCs and the first and second contents are both web pages.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations shall fall in the scope of the invention.

## Claims

1. A method for presenting a selected content on a first device, **characterized by** the steps of
obtaining, by said first device, said selected content, wherein said selected content is determined based on a first content presented on a second device; and
presenting, by said first device, said selected content.

2. The method of the claim 1, **characterized in that** said first device is presenting a second content before presenting said selected content, and said selected content is presented according to the presentation of said second content.

3. The method of the claim 1, **characterized in that** said selected content is obtained from a server configured to store said selected content, and the step of obtaining said content further comprising:
receiving a content identifier uniquely indicating the selected content from said second device; and
deriving said selected content from said server based on said content identifier.

4. The method of the claim 1, **characterized in that** said selected content is obtained from said second device, and the step of obtaining said content further comprising:
if said selected content is stored in said second device, deriving by said first device said selected content from said second device; or
if said selected content is stored in a server configured to store said selected content, said second device firstly derives said selected content from said server and then the first device derives said selected content from said second device.

5. The method of the claim 1, **characterized by** further comprising:
determining, by said first device, at least one parameter for presentation of said selected content;
and wherein said selected content is presented based on said at least one parameter.

6. The method of the claim 5, the step of determining said at least one parameter further comprising one of below steps:
receiving said at least one parameter from said first server;
receiving said at least one parameter from said second device; and
determining by said first device said at least one parameter based on the content type of said selected content.

7. The method of the claim 5, **characterized in that** said at least one parameter comprises at least one of a group comprising a time parameter indicating starting time of presentation, a position parameter indicating the presentation position, a size parameter indicating the presentation size and a length parameter indicating the length of the presentation.

8. The method of the claim 1, **characterized in that** the determination of said selected content further comprising:
said selected content is determined based on at least one of a group comprising currently browsed web page, key words inputted in a search engine, user's selection by clicking a button or link, and statistic of web pages having been browsed.

9. The method of any one of the claims 1 to 8, **characterized in that** the content type of said selected content is in a single type or a combination of types among a group comprising: text, audio, video, image, animation and flash.
